# EUROPEAN PATENT APPLICATION

(11) **EP 1 321 908 A2**
(43) Date of publication of application: **25.06.2003**
(21) Application number: 02380262.2
(22) Date of filing: 16.12.2002
(51) Int. Cl.: G07F 9/02, G07F 5/18

(54) **A vending machine control system**

(30) Priority: 18.12.2001 ES 200102822
(71) Applicant: AZKOYEN INDUSTRIAL, S.A., E-31350 Peralta (Navarra) (ES)
(72) Inventor: Penaranda Marques, Jose Antonio, 20008 Donostia (ES); Galarza Rodriguez, Ainhoa, 20009 Donostia (ES); Ursua Sanchez, Pablo, 20001 Donostia (ES); De Hita Hernandez, Emilio, 31003 Pamplona (ES); Echavarri Sanz De Galdeano, Luis Santos, 31200 Estella (Navarra) (ES)
(74) Representative: Davila Baz, Angel

(57) **Abstract**

A vending machine control system which includes a main module (1), a means of payment module (2), a user interface module (3), at least one extraction module (4) and at least one serial communications bus (6). The main module (1), the means of payment module (2), the user interface module (3) and the extraction module (4) are arranged so that, at least, the main module (1) can communicate with said means of payment module (2), user interface module (3) and extraction module (4) over said bus (6).

The system includes means of modifying, at least, part of the programs of the microcontrollers of the main module (1), of the means of payment module (2), of the user interface module (3) and of the extraction module (4), over said bus (6).

## Description

### FIELD OF THE INVENTION

The invention is included in the field of vending machines.

### BACKGROUND OF THE INVENTION

Vending machines, such as the "Palma Mixta" machine of the Azkoyen® group (Spain), are known wherein all the logic is located on a single control card, which receives the information coming from the sensors of the machine and sends the pertinent commands to the peripheral elements or units, for example, to the extraction motors, electro-valves, etc., by means of a series of cable bundles. In most cases, one, or various input and output (I/O) cards are employed as interface between the control card and the peripheral elements.

This configuration of the machine implies a series of problems. The need to use cable bundles of different length and number of wires (according to the requirements of each peripheral element) complicates and makes more expensive the assembly of the electronics, as well as the maintenance thereof. Also, when it is desired to modify a machine, for example, to substitute one type of extractor device for another, or one type of means of payment device for another, it can be necessary to modify all the wiring related with said device, which, clearly, makes it more difficult to modify or upgrade a machine. That is, this configuration implies poor flexibility.

For this reason, it would be convenient to establish a more modular system, with a distribution of the machine logic which reduces the number of cable bundles by means of decentralizing the control logic on several control cards, each one with its determined functions, and by means of the use of one or various buses (power and control), which connect the different control cards.

Examples of the state of the art, in relation with vending machines and which envisage a certain distribution of the logic and/or the use of communications buses, are US-A-6 119 053, US-A-5 959 869 and JP-A-5-89325.

Other examples of the state of the art in relation with control systems in general (but not specifically with vending machines) are EP-A-0 791 506, US-A-5 352 957 and US-A-4 459 655.

Moreover, the European patent application EP-A-0 996 103 describes vending machines in which a control card communicates with a plurality of peripheral components of the machine not by means of bundles of parallel cables mentioned above, but by means of a serial communications bus. Both the control card and the peripheral components have their respective CPU. EP-A-0 996 103 describes how a program installed on the control card can be changed by replacing the data in a memory, EPROM, the original content of which is erased with ultraviolet light (according to the state of the art commented in EP-A-0 996 103) or by means of the connection of a RAM card.

Now, EP-A-0 996 103 seems only to refer to the change of the program on the central control card, and makes no reference to the possibility of changing programs and/or data in other modules of the machine. Therefore, it appears that EP-A-0 996 103, in spite of a certain distribution of the logic (several CPUs, associated with peripherals and connected to the control card by means of a serial communications bus), in fact also envisages a fairly centralized control system, wherein all the relevant functions capable of being modified are located on the control card, which implies a fairly low degree of modularity and flexibility.

To increase the flexibility of the system, it would be desirable to achieve a greater degree of modularity.

Moreover, to reduce the manpower requirement, it would be convenient to reduce the requirement for physical manipulation of components to carry out modifications in the software (programs and data) of the machines. EP-A-0 996 103 describes procedures which require physical manipulation of memories (EPROM or RAM). It would be convenient to reduce to a minimum the requirement for such modifications, with the objective of obtaining a system which does not require any physical manipulation of the machine to upgrade the programs or data thereof but instead even allows upgrades or modifications to be carried out remotely, by means of, for example, connection by radio, telephone line, GSM, etc.

Another example of the state of the art is the American patent US-A-4 598 379. This document describes a system for control of a vending machine based on a module or main microcomputer which controls, by sending commands over one or several cables, the operation of several modules or sub-microcomputers, each of which controls a respective functional block of the vending machine. Among the functional blocks is a means of payment unit (with which is functionally associated the corresponding means of payment module or sub-microcomputer), a user interface unit (with which is functionally associated the corresponding user interface module or sub-microcomputer) and an extraction unit (with which is functionally associated the corresponding extraction module or sub-microcomputer).

This is a modular system wherein, however, a specific configuration of the modules has been foreseen; this implies that if it is desired to change one of the modules associated with the means of payment unit, the user interface unit or the extraction unit, it can be necessary to change the main module or, at least, to change substantially the aforementioned programs and/or data in this main module. It is not foreseen to change the basic programs of the modules over the bus, nor is the possibility envisaged of adapting the operation of the main module in an automatic way, as a function of the specific characteristics of the secondary modules or sub-microcomputers. That is, the system expounded in the document US-A-4598379 seems to offer flexibility as regards the wiring, but it is not easily extendible since the replacement of one of the secondary modules with another could also require replacement or substantial modification of the main module. That is, for example, if it is decided to incorporate a new means of payment unit, it can be necessary to design a new means of payment module, for the purpose of permitting adequate control of said module. Now, to be able to incorporate the new means of payment module, it would be probably also necessary to change the main module or to modify the programs of said main module (US-A-4596379 does not explain how such modifications would be carried out). Logically, all this implies a lack of flexibility. Therefore, a system with distributed logic would be desirable which facilitates the wiring and which also allows that a large part of said distributed logic (specifically, one or several of the modules) can be modified (for example, a means of payment module to be replaced by another) without this requiring modifications to the other modules.

### DESCRIPTION OF THE INVENTION

The invention relates to a system in accordance with claim 1. Preferred embodiments of this system are defined in the dependent claims.

Basically, it is a vending machine control system which includes:
a main module (hereinafter also termed PRI);
at least one means of payment unit which includes means to collect and to detect a payment;
at least one user interface unit which includes means of displaying messages to the user and/or means of introducing instructions on the part of the user;
at least one extraction unit which includes means of extracting products by means of, at least, one product extractor;
a means of payment module (hereinafter also termed MDP) functionally associated with said means of payment unit, said module comprising, at least, one microcontroller;
a user interface module (hereinafter also termed IDU) functionally associated with said user interface unit, said module comprising, at least, one microcontroller;
at least one extraction module (hereinafter also termed EXT), functionally associated with said extraction unit; said module comprising, at least, one microcontroller;
at least one serial communications bus.

The main module (PRI), the means of payment module (MDP), the user interface module (IDU) and the extraction module (EXT) are arranged so that, at least, the main module (PRI) can communicate with said payment module (MDP), user interface module (IDU) and extraction module (EXT) over said bus (6).

The system includes means of modifying data in memories of the modules (PRI, MDP, IDU and EXT) over said bus.

According to the invention, the system also includes means of modifying, at least, one part of the programs of the microcontrollers of all the aforementioned modules (PRI, MDP, IDU and EXT) over said bus. The microcontrollers include means of erasing and of rewriting part or the entirety of their program memory. According to a preferred embodiment of the invention, microcontrollers are used which are found on the market and which can implement this process using only their own resources; microcontrollers with these characteristics are supplied by, for example, Microchip (PIC 18FXXX), Motorola (MC 68HC908XXX), SGS-THOMSON (ST7232XXX) and Texas Instruments (MSP430FXXX), among other manufacturers. However, the invention can also be implemented with microcontrollers without this self-programming characteristic, in which case the microcontrollers are assisted by external circuitry in implementing the partial or total change of their programs.

To upgrade the control program of one of the modules, the entirety or part of the program is sent to the module over the bus. In the module, the program is recorded in the program memory of the module's microcontroller, either directly, or through a buffer memory.

Preferably, the control program of a module can be upgraded by parts, in which case it is not necessary to transmit and to record the entirety of the program, whereby the process of upgrading is accelerated in the event of new facilities arising or program errors being corrected which only affect some portion of the program of each module.

So that this procedure is possible, the machine code of the program of each module should be divided into sections. This means that said machine code should be subdivided into groups of functions, and each of said groups should be associated with some fixed start and end positions in the flash memory (or flash EPROM) of the program (the flash memory is a type of EPROM in which the program code can be amended straight away, by sectors). Thus, when this association is known by the programmer who works from an external terminal, it is possible to upgrade both the complete software of a module and to upgrade a certain fragment of software. Logically, there can be a certain part of code which cannot be modified from the exterior, for example, that corresponding to communications via bus and to flash memory reading /writing.

The system includes the necessary means to carry out the operations indicated above.

Next, the function of each module will be commented briefly:

### The main module (PRI):

Its purpose is to coordinate the activities of all the elements of the machine to perform the functionalities required of it, which can include: sale of products, maintaining accounts and statistics, communication with the user and with external means to obtain information on sales, communication with the user and with external means to carry out maintenance and servicing of the machine, and automatic supervision of its own operational state.

With regard to its function of coordinating, the main module should carry out preferably the following functions: orderly initiation of each module; periodical scanning of the state of each module; service development.

The main module can also carry out intermediation in the phases of executing functions of programming, data communication and upgrade of sections of program of other modules.

To be able to carry out its functions in an appropriate way and to assure the modularity of the system, the main module (PRI) includes preferably means of requesting information relative to their configuration from the means of payment module (MDP), the user interface module (IDU) and the extraction module (EXT) over the bus, and each of said modules (MDP, IDU and EXT) includes means of sending the requested information relative to the configuration thereof to the main module (PRI) over said bus, the main module (PRI) having means of storing a configuration profile of each of said modules based on said information relative to the configuration thereof. The main module (PRI) is arranged so that it communicates with the other modules (MDP, IDU and EXT) by sending instructions and/or data as a function of the stored configuration profile. Therefore, when the machine starts up, the main module scans the configuration of the other modules and, based on the results of said scan, it stores a configuration profile with the object that its subsequent communication with said modules is carried out as a function of the configuration thereof, that is, in a way that is adapted to the characteristics of the other modules. This is important to assure modularity: if a module with certain characteristics (need for data, capability to carry out operations, etc.) is replaced with another having other characteristics, the main module detects this and carries out its subsequent communication with the module in accordance with the characteristics of said module, providing it with the data and instructions it requires in the appropriate format.

Preferably, in the main module (PRI) those performances or characteristics of the machine are defined which are specific to a given application, for example: requirements of the machine type, requirements of the destination country or geographical area and/or requirements of a customer. That is, the main module can include specific data relative to a certain customer, to a certain machine and/or a certain geographical area, whilst the other modules do not include such data.

Thus, the design of the rest of the elements of the machine becomes independent of this type of variables and is rendered uniform for all peripherals of a same type, whereby, when the vending machines are manufactured, the only one of the modules (PRI, MDP, IDU and EXT) which differs as a function of the particular conditions of the machine, country (or geographical area) and/or customer is the main module (PRI).

### The means of payment module (MDP):

In general terms, the functions which, preferably, the means of payment module (MDP) should carry out, are:
- Detect the introduction of credit in any one of the means of payment units or peripherals and inform the main module (PRI) of this.
- Decide as a function of the available credit, the available change and the price of a product, if it is possible to make the sale of said product.
- Inform the main module (PRI) of the exact amount of available credit.
- Calculate and return the corresponding change after a sale or the credit introduced after a cancellation, be this through depressing the return key, exceeding time limits or any other reason.
- Detect the number and type of means of payment units or peripherals available.
- Provide the main module (PRI) with all the data requested from it for a correct administration of accounts.
- Inform the main module (PRI) of the operational state in which the means of payment module (MDP) is, as well as its logic state.
- Carry out the menu functions necessary to modify its own local data, via user interface module (IDU), through the main module (PRI).
- Allow variation of its configuration both via user interface module and via communications module.
- Facilitate the change of its program totally or partially, by means of writing one or several program sections.

Next, by way of example, different means of payment units or peripherals are indicated which can be connected to the MDP:
- Coin return motor module.
- MDB-ICP coin mechanism (MDP-ICP: international standard of the vending sector).
- Executive type coin mechanism (Protocol A of Mars®).
- BDV coin mechanism (BDV: German standard of the vending sector)
- Coin validator, Protocol Azkoyen® L.
- Coin validator, BDTA Protocol (BDTA: German standard of the association of manufacturers and operators of cigarette machines).
- Coin validator, BDTA Protocol, battery fed.
- Coin selector.
- Change giver, tube type.
- Change giver, RODE-E (RODE®: Azkoyen® Mark).
- Change giver, RODE-U (RODE®: Azkoyen® Mark).
- Change giver, RODE-U (RODE®: Azkoyen® Mark) with discriminator.
- Coin escrow, "V" blades.
- Coin escrow, "T" rotary.
- Banknote reader, MDB-ICP.
- Banknote reader, type OTR-CBV ®.
- Banknote reader, type Smiley.®
- Bank card reader, MDB-ICP.
- Debit card reader, asynchronous communication, Orga ® protocol
- Debit card reader with direct card control.

Several options exist for the arrangement of the means of payment module.

A first possibility is that several means of payment modules (MDPs) coexist in a single machine, each one controlling different peripherals of those aforementioned. This favours scalability, by allowing as many modules to be added to the main bus as is desired. Also, it simplifies wiring, since the different modules can be connected directly to the main bus. However, this alternative implies a series of disadvantages, namely: the cost is increased notably, as each group of peripherals requires a different microcontroller (µC); it is necessary to have as many modules as there are different groups of peripherals which can be connected to one module; and it impairs the modularity, as the PRI has to handle the different credit possibilities, the return of the different modules, etc.

A second possibility consists in using a single means of payment module per machine, which controls several of the units or peripherals previously mentioned. Depending on the machine type and application, the most appropriate means of payment module (MDP) can be developed.

This alternative would imply a series of advantages, namely, it can reduce the cost, since only one microcontroller (µC) is required to control all concerning means of payment; it favours modularity, because the main module (PRI) is communicates in the same way regardless of the means of payment module (MDP) that is mounted in the machine; in principle it does not make wiring more complicated because all the means of payment peripherals can usually be located near the means of payment module (MDP) to which they are connected.

The disadvantages that this alternative presents are: it is not scalable (in the event of it being necessary to connect a peripheral not previously foreseen, it would be necessary to develop a new module).

It is possible to design several means of payment modules, each one with means to work with and be connected to a habitual combination of peripheral or means of payment units. When a machine is developed, a combination of means of payment units or peripherals is selected for it which correspond to an existing means of payment module (MDP).

Preferably, the invention is implemented in accordance with the second alternative indicated above, since it is considered more practical and more economical. However, preferably the connection is possible of more than one means of payment module (MDP) per machine, for the purpose of allowing tele-payment. This is because even though the tele-payment function is in the communications module (COM) (which will be commented below), to all effects it will be considered as another means of payment module MDP of the machine. If there is more than one means of payment module (MDP), the main module will only take one of them into account when making a sale. Otherwise, combinations of credit, change, etc. could arise, among the different means of payment modules (MDPs) and the characteristic functions of the means of payment module (MDP) would pass to the main module (PRI), impairing the modularity concept.

### User interface module (IDU):

In general terms, the functions which a user interface module (IDU) should carry out are those of handling the keypads, displays and other devices that allow the users to interact with the machine. Next, by way of example, a series of functions are mentioned:
- Recognize the depression of any key, identify it and inform the main module (PRI).
- Present messages on a display of the machine; the messages can come from the main module (PRI), from other modules or from the user interface module (IDU) itself.
- Inform the main module (PRI) that the operator wants to access a certain menu function (by means of the programming keyboard), identifying it with its corresponding code.
- Edit the modifiable configuration parameters of the machine by means of menu functions, and allow their modification by the operator. These configuration parameters can be data residing in any one of the modules; the necessary protocol is set up to carry out the modification of said data.
- Inform the main module (PRI) of the operational state the module is in, as well as of its logic state.
- Detect the user interface units or peripherals connected to the module and send this information to the main module (PRI).
- Inform the main module (PRI) of the menu functions which can be implemented by the user interface module (IDU) itself, within a general list of possible functions. Likewise, it should allow variation of its configuration parameters both through the IDU itself and through the communications module (COM).
- Facilitate change of its program totally or partially, by writing one (or several) program sections.

With the objective of reducing intervention of the main module (PRI) and that the administration of the menu functions be carried out mainly by the user interface module (IDU), the latter should know the functions which the machine has available. However, the information of all the functions of the machine will be distributed among the different modules thereof, according to the functions which each module permits, thereby achieving a greater modularity of the system. To gather all the information in the IDU, the following procedure can be carried out: 1) On starting up the machine the main module (PRI) queries all the modules on what functions they have; 2) Each module will respond with the codes of the menu functions which it has; and 3) The main module (PRI) sends the list of the function codes which the machine has to the user interface module (IDU).

Thus, every time that the operator accesses a menu function (starting from its code), the user interface module (IDU) will communicate this to the main module (PRI) which will act in consequence, informing the module in question, and that module will communicate directly with the user interface module (IDU). When the operator has selected the menu function which he/she wants to execute, the user interface module (IDU) will communicate this to the main module (PRI), and the latter will inform the pertinent module so that it executes the function.

### Extraction module (EXT):

In general terms, the functions that an extraction module (EXT) should carry out are:
- Extraction of the product indicated by the main module (PRI), liberating the latter of said task.
- Impeding the undesired extraction of the product.
- Detecting the number of extractor groups connected to the module, the number and type of the extractors connected to each one of them, as well as sending this information to the main module (PRI).
- Gathering information from the extractors, such as the presence of each of the products, the egress of the product sold or the possible faults in the extraction motors, and communicating this to the main module (PRI) so that the latter duly processes it (product accounting, illuminating fault or out-of-product indicators, communicating faults to the exterior, charging for the product, etc.).
- Informing the main module (PRI) of the operational state the module is in, as well as its logic state.
- Carrying out the menu functions necessary to modify its own local configuration data, by means of the user interface module (IDU), through the main module (PRI).
- Informing the main module (PRI) of the menu functions which a specific extraction module can implement, within a general list of possible functions.
- Allowing variation of its configuration both through the user interface module (IDU) and through the communications module (COM).
- Facilitating the change of its program totally or partially, by writing one (or several) program sections.

The extraction module (EXT) can be connected to and work with, for example, one or several of the following types of extractors:
- Snack extractors (screw type)
- Can and bottle extractors
- Bottle extractors (tray type)
- Tetra brick extractors (carrousel type)
- Cigarette packet extractors
- Cup and stirrer extractors (coffee machine)
- Soluble product extractors (coffee machine)
- Fresh-brew type extractors (coffee machine)
- Coffee assembly (coffee machine)
- Sugar extractor-arm (coffee machine)

The objective of incorporating extraction modules in the vending machine is twofold. On one hand, this allows control of the machine to be programmed in modular form, so that control of the product extractors is carried out from the extraction module (EXT) and not from the main module (PRI). And also, this allows the electronics of the machine to be simplified since the input and output cards are eliminated which, in the conventional machines, connect the (single) central control module with the extractors and the wiring of the machine is simplified.

As regards relations between the extraction module and the extractors, there are several basic alternatives:

A first alternative consists of only using one extraction module for the whole machine, in which case said extraction module controls all the extractors; in this case, a single extraction module may have to control several types of extractors. This alternative implies a low cost since only one microcontroller is used to carry out the extraction module functions, at the same time as the main module (PRI) can be liberated from the task of deciding the channel from which it should extract, since all the extractors are connected to the same extraction module (EXT). However, this alternative can require microcontrollers with greater memory capacity (capable of storing the logic of all the types of extractors which can be installed in a vending machine), implies less scalability and more complex wiring (since some extractors can be physically very remote from the extraction module (EXT)).

Another alternative would be to have a specific extraction module for each extractor type which the vending machine includes. Thus, one extraction module (EXT) would be installed in the vending machines which have a single extractor type (for example, cigarette machines), while those models which have several types of extractors (for example, because they sell different types of products which require different extraction mechanisms) would incorporate several extraction modules (EXT). Both the functionality and the communication interface of the different extraction modules (EXT) should be identical, so that the type of extractor controlled by the module is transparent for the rest of the machine.

The advantages of this second alternative are the following: it facilitates the wiring (because it allows location of the different extraction modules near the corresponding extractors); it allows the use of microcontrollers with less memory capacity (since they have to include only the control logic of the type of extractor employed) (if the memory capacity so allows, it is possible to program a same extraction module with the logic of several extractor types in order to reduce inventory); and it facilitates the customisation of the number and type of connectors to the type of extractor employed.

The drawbacks are: it impairs partly the modularity because it requires the main module (PRI) to know the relationship between the different selections and the extraction channels, since it has to request extraction of the selection by the extraction module which corresponds to the extraction channel in which the corresponding product is situated. The main module (PRI) should likewise handle the accounting data relating to the extraction to contemplate the possibility that a same product is in two different extractor types or that there are promotions of products associated with products located in another extractor type (for example, snacks and cans of soft drinks). Also, this second alternative requires the use of a greater number of cards (one for each extraction module).

According to a sub-modality of this second alternative, the possibility exists of using several extraction modules of a same type inside a same machine. This improves the scalability and simplifies the wiring, but it also implies an increase in the number of cards (one per module) and, therefore, in the cost, and it also requires the allocation of a new address to the extraction module (EXT) in case the main module (PRI) detects the connection to the control bus of several modules of the same type.

According to a third alternative, a control module of the extraction system is connected to the aforementioned bus (the main bus), from the serial communications controller of which module runs a local bus of the extraction system. To this local bus different product extraction modules (EXT) are connected, each one of these modules taking charge of the control of one or several extractors. The connection of the extraction modules to the local bus is carried out through the respective serial communications controllers of the microcontrollers employed and preferably a simpler protocol is used than that employed on the main bus.

The advantages of this third alternative are the following: it favours scalability; it allows the main module (PRI) to be liberated from the task of deciding the channel from which extraction should be made, thanks to the connection of all the extractors to the same module of control of the extraction system; and it allows less costly microcontrollers to be used in the extraction modules (EXT), since the microcontrollers employed should have only a simple serial communications controller (UART type) for their connection to the local bus of the extraction system.

The main drawbacks of this option are: it requires the use of a greater number of cards and slows the reprogramming of an extractor type, by requiring the replacement of the program of the different extraction modules corresponding to said extractor type.

### Communications module (COM):

Preferably, the system also includes a communications module (hereinafter also termed COM) which includes means of communication with an external terminal. Preferably, the communications module (COM) includes means of converting data received from the external terminal, in accordance with an external format, into an internal format of the machine.

The main function of the communications module (COM) is that of interface between the vending machine and an external terminal and, therefore, it should be able to receive, store or send information related with, for example:
- General configuration of the machine and its modules, including the communications module (COM) itself
- General events and incidents of the machine and of its modules
- General software upgrade of the machine, of one or several of its modules (including the communications module itself), by writing the program section or sections which correspond.
- General accounting of products or of money.

Said information regarding requesting writing or reading of machine data can be presented to the communications module (COM) from the external terminal in different formats or protocols. The mission of the communications module (COM) is that of decoding it and presenting it to the machine independently of the transmission medium or protocol used in the communication between the external terminal and the communications module (COM). Thus, it can be interpreted that the function of the communications module is that of translation of the protocols which the external terminal can send into commands characteristic of the vending machine.

Thus the following is achieved:
- Relieving the main module (PRI) of the tasks of decoding the different protocols employed.
- The main module (PRI) need not know each and every one of the commands corresponding to each protocol.

The external terminal can be remote.

Preferably, the communications module (COM) implements the functions corresponding to tele-payment by means of mobile telephone.

Therefore, to communicate with a vending machine which incorporates a control system in accordance with the present invention, the use of a determined protocol is not required, but instead the machine is capable of communicating with external terminals according to a plurality of protocols, depending on the specific characteristics of the communications module. Examples of protocols which can be used in this field are:
- EVA-DTS (international standard of the sector)
- Enhanced DDCMP (international standard of the sector)
- DEX/UCS (American standard of the sector)
- VTM (internal standard of Azkoyen®)
- BDTA (German standard of the sector)
- Control of a printer

Preferably, the communications module comprises means for communicating with the external terminal over a plurality of physical means of transmission, for example:
- Infrared beam by means of ASK (Amplitude Shift Keying; generic method) and IrDA®.
- RS-232.
- Direct communication via an I/O pin of the microcontroller.
- GSM modem.
- Fixed telephony modem.

The communications module has to comprise means of carrying out several and, preferably, all of the following functions:
- Detecting the input of whatever of the supported protocols
- Decoding the information received
- Distinguishing whether the message is addressed to the communications module (COM) itself or to another module of the vending machine.
- If the message is addressed to the communications module (COM) itself, then establishing a dialogue by means of commands between the external terminal and the communications module (COM) so that the external terminal can:
   - Read configuration data of the COM
   - Modify configuration data of the COM
   - Read data of events and incidents of the COM
   - Upgrade the actual software of the COM
- Otherwise, that is, if the message is not addressed to the communications module (COM) itself, transforming the message into commands and data which will be sent to the main module (PRI) over the bus.
- Receiving messages from the main module (PRI) over the bus, to transform them into appropriate commands and data according to the protocol which is used and sending them to the external terminal.

The objective of the last two functions is:
- Reading general configuration data of the vending machine or of any module
- Modifying general configuration data or of any module
- Reading data of general events and incidents of the machine or of any module
- Upgrading the software of any module
- Reading the general accounting of products or of money
   - Sending certain data regularly according to a schedule of calls via modem.
   - In the event of a serious incident occurring, sending information relative thereto via modem to an external terminal.
   - Informing the main module (PRI) of the operational state in which the communications module (COM) is, as well as its logic state.
   - Carrying out the menu functions necessary to modify its own local data, by means of the user interface module (IDU), through the main module (PRI).
   - Allowing tele-payment of the selected product (in this case and from a functional point of view, the communications module will be considered a means of payment module from the rest of the system).

As has already been indicated, one of the main functions of the communications module (COM) is that of translator between the vending machine and an external terminal and its mission is that of receiving, storing and/or sending information. The external terminal can send said information in different formats or protocols. The communications module comprises means of decoding the information received and of presenting it to the machine according to an internal format/protocol of the machine, independently of the protocol or transmission medium used by the external terminal.

To carry out the function of translation, the communications module (COM) comprises preferably means of:
- Decomposing the command received into an elementary data set to read or to write.
- For each elementary data item, sending the main module (PRI) an internal read or write command. In the event of reading, the main module (PRI) will respond with the requested data item. In the event that information is to be returned to the External Terminal, the communications module will compose the elementary data (sent from the main module) to form the response command corresponding to the communication protocol of the external terminal.

As has been stated, one of the main functions of the communications module (COM) is that of facilitating the upgrade of the software of the modules of the machine (including that of the communications module itself). This function is carried out preferably in the following way:
- The external terminal indicates to the communications module (by means of a command) the module of the machine, the starting address of the memory in which the new software will be written and the actual data.
- The communications module (COM) forwards this information to the main module.

Therefore, the main module (PRI) will take charge of carrying out the task of replacing the old software with the new, whereby, in a first stage, there will be no interaction between the communications module (COM) and the rest of the modules of the machine (that is, the means of payment, user interface and extraction modules).

### The bus:

The bus is preferably a CAN (Controller Area Network®, Robert-Bosch GmbH.) bus. The speed and reliability characteristics of the CAN bus are superior to those of other buses on the market. Furthermore, controllers of this bus are presently being integrated in numerous families of microcontrollers on the market, without increasing excessively the cost of these microcontrollers.

The main advantages of using this bus type are:
- High reliability, minimal error rate and high signalling speed.
- It liberates the microcontroller (µC) from the tasks of error correction, retransmission of frames, etc., because these are carried out by the actual bus controller integrated in the microcontroller.
- The microcontroller has to attend communications interruptions every 8 bytes, unlike other standards where the microcontroller has to attend interruptions every byte.
- The increase in cost through using a CAN bus is minimal due to its massive employment in the motor vehicle sector. There are other design alternatives for buses, not integrated in the microcontroller, which require the introduction of external controllers and components, as well as the corresponding control program, which increases the overall cost of the system.
- Flexibility in the communications.
- Any node connected to the bus can communicate with any other.
- A node can be configured to listen to all, none or determined messages which are transmitted over the bus.

### BRIEF DESCRIPTION OF THE DRAWINGS

A very brief description is given below of a series of drawings which assist in a better understanding of the invention and which are related expressly with an embodiment of said invention which is presented by way of example thereof and not restrictively.
Figure 1 is a block diagram which shows the configuration of a preferred embodiment of the system, in which the different modules and the bus can be seen.
Figure 2 is a block diagram which shows the means of payment module and the means of payment units associated therewith.
Figure 3 is a block diagram which shows the user interface module and the user interface units associated therewith.
Figure 4 is a block diagram which shows several extraction modules and the extraction units associated therewith.
Figure 5 is a block diagram of a transistor card which performs the interface function between an extraction module and one or several extractors.

### DESCRIPTION OF A PREFERRED EMBODIMENT OF THE INVENTION

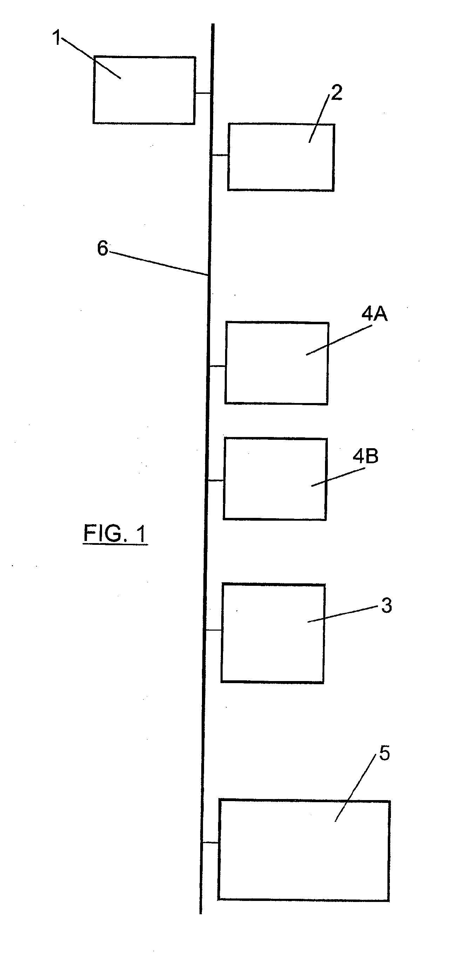

In **figure 1** the basic configuration can be seen of a preferred embodiment of the invention, in which main module (1), means of payment module (2), user interface module (3), a first extraction module (4A) (intended for control of a first type of extractors, for example, extractors of the screw type), a second extraction module (4B) (intended for control of a second type of extractors, for example, can extractors) and communications module (5) are connected to a CAN bus (6). In this case, the option has been chosen to have only one means of payment module (2) which can control several peripherals or means of payment units. Moreover, two extraction modules (4A, 4B) have been incorporated, each designed for the control of a determined type of extractor, that is, with this system it is possible to control a vending machine with two different types of extractors.

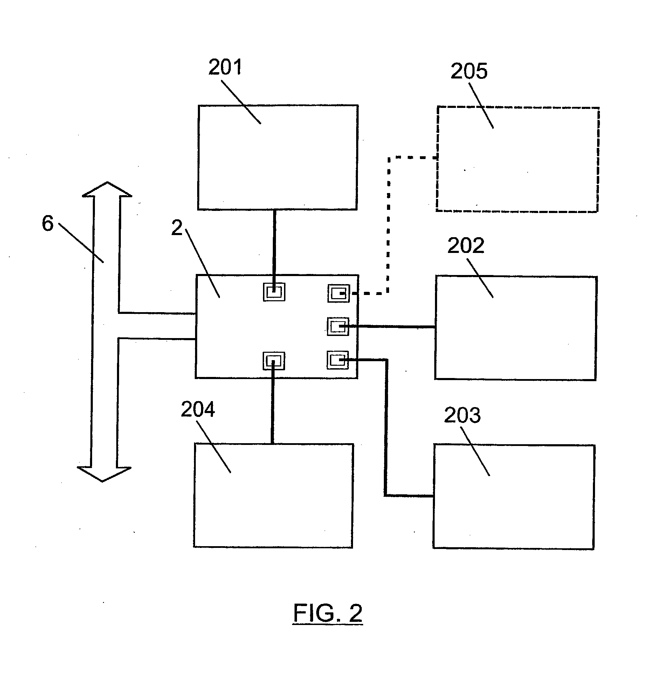

**Figure 2** illustrates how, in accordance with a preferred embodiment of the invention, means of payment module (2) is connected by means of cables to a coin return module (201), an MDB ICP coin mechanism (202), an MDB-ICP bank note reader (203) and a card reader (204).

The possibility also exists of connecting an executive type coin mechanism (205). In this case, the means of payment module would only take charge of controlling said coin mechanism (205) and the return module, whilst bank note reader (203) and card reader (204) would be handled by executive type coin mechanism (205) and would be connected to this. If the system incorporates said executive type coin mechanism (205), the MDB-ICP coin mechanism (202) is not necessary.

It is convenient to bear in mind that an executive type coin mechanism (the same as an MDB-ICP bank card reader) has no obligation to inform the means of payment module of the exact amount of credit which they have. In any case the main module (PRI) only has to use the credit information for displaying messages, never to perform any type of calculation since that task is carried out by the means of payment module.

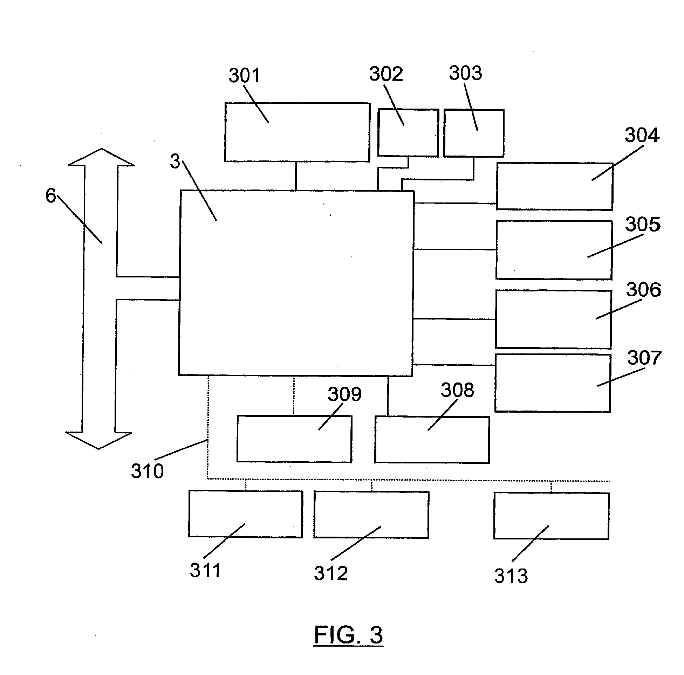

**Figure 3** shows a block diagram in which it can be seen how the user interface module is associated with a monitor (301) (for example, an LCD screen of 16x2 characters, or an LED display with 8 characters), an indicator (LED) which indicates the out-of-change condition (302), an indicator (LED) which indicates the out-of-product condition (303), a button pad (304) in which each button is associated with a product, an alphanumeric keypad (305) (with this keypad it is necessary to press more than one key to make a selection and usually it is associated with screw extractors, for which reason it is also known as a screw keypad), 1 programming keypad (306) with 4 keys (A, B, C, D) which allow the operator to access and operate the machine configuration menu, 1 coin return button (307), an audible buzzer (308) (which emits beeps when the keys are pressed). Also, it can include a voice synthesizer (309) and one or several screens indicating price or product out of stock (311, 312 and 313) which are connected to user interface module (3) by means of a synchronous type local bus (310).

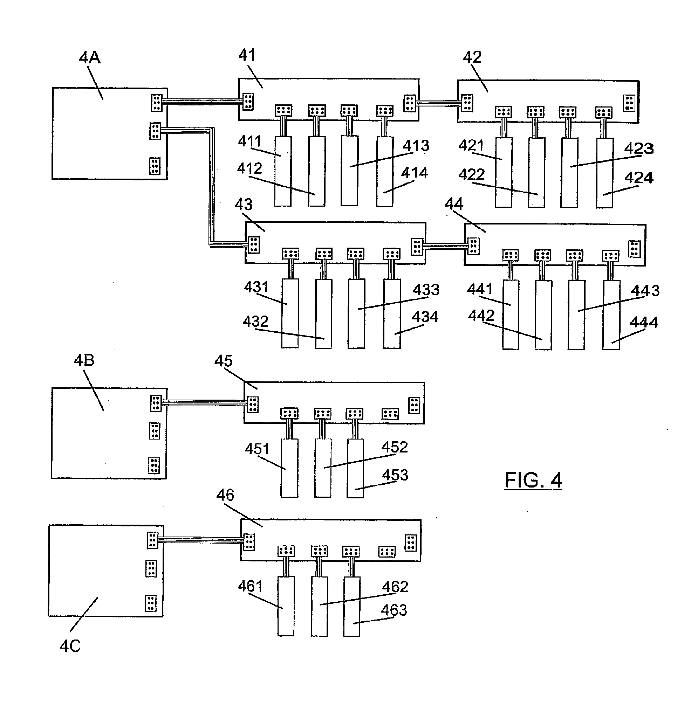

In **figure 4** it is observed how a first extraction module (4A) has been arranged to control a series of screw extractors (411-414; 421-424; 431-434; 441-444) through respective transistor cards (41; 42; 43; 44). Eight of the screw extractors (411-414; 421-424) correspond to a first tray of products and the others (431-434; 441-444) correspond to a second tray of products.

Moreover, the machine also includes extractors of another type, namely, can extractors (one of the types of can extractors employed by Azkoyen®) (451-453); these are controlled by a second extraction module (4B) through the corresponding transistor card (45).

Also, the machine can include other types of extractors, in which case the extraction modules specifically designed to control said types of extractors are added preferably. For example, in **figure 4**, a third extraction module (4C) is illustrated which controls, through transistor card 46, a plurality of extractors of carrousel type (461-463).

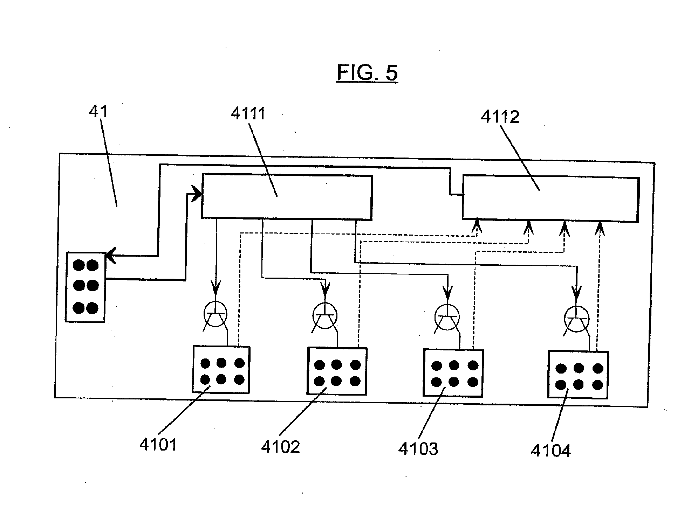

In **figure 5** one of the transistor cards (41) is illustrated schematically. The transistor cards (41-46) perform the interface function between the extractors and the corresponding extraction modules. Each extraction module (4A, 4B, 4C) has a series of connectors to which one or several transistor cards are connected, which in turn have four connectors (4101-4104) for connection of up to four extractors, it being possible to connect several transistor cards in series. To each connector (4101-4104) of the transistor card come the cables which power the extraction motor and the cables of the different micro-switches (end of travel, out of product, etc.) installed. The card also includes, either a transistor to regulate each of the motors with a single direction of rotation, or a transistor bridge for the motors which can turn in both directions, it being possible to have one of the arms of the bridge common to all extractors. The switching logic of the transistors resides in the microcontroller of the extraction module, which likewise has access to the values of the different micro-switches.

To simplify the wiring, transistor card (41) incorporates shift registers (4111, 4112) to act on the transistors and read the information of the micro-switches. With these registers the information in parallel form existing between transistor card (41) and extractor (411, 412, 413, 414) (the applied voltage on the different transistors or the voltage level of the micro-switches of the different extractors) is converted into serial communication between extraction module (4A) and transistor card (41), the information bits of the different extractors being sent sequentially.

## Claims

1. A vending machine control system which includes:
a main module (1);
at least one means of payment unit which includes means to collect and detect a payment,
at least one user interface unit which includes means of displaying messages to the user and/or means of introducing instructions on the part of the user;
at least one extraction unit which includes means of extracting products by means of, at least, one product extractor;
a means of payment module (2) functionally associated with said means of payment unit, said module comprising, at least, one microcontroller;
a user interface module (3) functionally associated with said user interface unit, said module comprising, at least, one microcontroller;
at least one extraction module (4), functionally associated with said extraction unit, said module comprising, at least, one microcontroller;
at least one serial communications bus (6);
the main module (1), the means of payment module (2), the user interface module (3) and the extraction module (4) being arranged so that, at least, the main module (1) can communicate with said means of payment module (2), the user interface module (3) and the extraction module (4) over said bus (6);
the system including means of modifying data in memories of the main module (1), of the means of payment module (2), of the user interface module (3) and of the extraction module (4), over said bus (6);
**characterised in that**
the system includes means of modifying, at least, part of the programs of the microcontrollers of the main module (1), of the means of payment module (2), of the user interface module (3) and of the extraction module (4), over said bus (6).

2. System according to claim 1, **characterised in that** the main module (1) includes means of requesting information relative to their configuration from the means of payment module (2), the user interface module (3) and the extraction module (4) over the bus (6), and each one of said means of payment module (2), user interface module (3) and extraction module (4) includes means of sending information requested relative to its configuration to the main module (1) over said bus (6), the main module (1) having means of storing a configuration profile of each one of said modules based on said information relative to the configuration thereof; and **in that**
the main module (1) is arranged so that it communicates with the means of payment module (2), with the user interface module (3) and with the extraction module (4) by means of the sending of instructions and/or data as a function of the stored configuration profile.

3. System according to any one of the previous claims, **characterised in that** the main module (1) includes specific data relative to a determined customer, to a determined machine and/or to a determined geographical area.

4. System according to the previous claim, **characterised in that** the means of payment module (2), the user interface module (3) and the extraction module (4) do not include data relative to a determined customer, to a determined machine and/or to a determined geographical area.

5. System according to any one of the previous claims, **characterised in that** it comprises, at least two different types of product extractors (411-414; 424-424; 431-434-441-444; 451-453; 461,-463) and **in that** it comprises, at least, one extraction unit (4A; 4B; 4C) for each one of said types of product extractors.

6. System according to any one of the previous claims, **characterised in that** the means of payment module is designed so that it can be connected to and work with a series of means of payment units selected among a plurality of existing means of payment units.

7. System according to any one of the previous claims, **characterised in that** it also includes a communications module (5) which includes means of communication with an external terminal.

8. System according to the previous claim, **characterised in that** said communications module (5) includes means of converting data received from the external terminal, according to an external format, into an internal format of the machine.

9. System according to any one of the previous claims, **characterised in that** the bus (6) is a CAN® bus.

10. System according to any one of the previous claims, **characterised in that** the microcontrollers include means of erasing and rewriting, at least, one part of the program memory thereof with no need for external circuits.

11. System according to any one of the previous claims, **characterised in that** it includes:
means of sending, at least, one part of a program over the bus (6);
recording said part of the program in the program memory of the microcontroller in a direct way.

12. System according to any one of claims 1 to 10, **characterised in that** it includes:
means of sending, at least, one part of a program over the bus (6);
recording said part of the program in the program memory of the microcontroller through a buffer memory.

13. System according to any one of the previous claims, **characterised in that** the machine code of the program of, at least, one of the modules is divided into sections corresponding to groups of functions, each one of said sections being associated with some fixed start and end positions in the flash memory of the program.
